(19) Europäisches Patentamt
European Patent Office
Office européen des brevets

(11) **EP 4 726 818 A1**

(12) **EUROPEAN PATENT APPLICATION**
published in accordance with Art. 153(4) EPC

(43) Date of publication:
**15.04.2026 Bulletin 2026/16**

(21) Application number: **24818548.0**

(22) Date of filing: **30.05.2024**

(51) International Patent Classification (IPC):
$H01M\ 8/18^{(2006.01)}$    $H01M\ 8/008^{(2016.01)}$

(52) Cooperative Patent Classification (CPC):
**H01M 8/04477; H01M 8/04194; H01M 8/0482;
H01M 8/04932; H01M 8/188; H01M 8/20;**
H01M 2300/0011; Y02E 60/50

(86) International application number:
**PCT/CN2024/096212**

(87) International publication number:
**WO 2024/251016 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.06.2023 CN 202310659813**

(71) Applicant: **VRB Energy Inc.
Grand Cayman (KY)**

(72) Inventors:
• **ZHAO, Zhiling
  Beijing 101100 (CN)**
• **LIU, Huichao
  Beijing 101100 (CN)**
• **GE, Qiming
  Beijing 101100 (CN)**

(74) Representative: **Ricker, Mathias
  Wallinger Ricker Schlotter Tostmann
  Patent- und Rechtsanwälte Partnerschaft mbB
  Zweibrückenstraße 5-7
  80331 München (DE)**

(54) **CAPACITY RECOVERY METHOD FOR VANADIUM REDOX FLOW BATTERY**

(57)    Disclosed is a method for recovering the battery capacity of a vanadium redox flow battery, comprising: S100: determining the overall valence of vanadium ions in electrolyte reservoirs of the battery after the discharge capacity of the battery attenuates, and charging the battery; S200: adding a reducing agent to a positive electrolyte reservoir of the battery; S300: allowing self-circulation in the positive electrolyte reservoir of the battery, so as to complete a chemical reduction reaction; S400: determining the overall valence of the vanadium ions in the electrolyte reservoirs of the battery again, and determining the residue of the reducing agent; and/or S500: replenishing the reducing agent in the positive electrolyte reservoir of the battery, and repeating steps S300 to S400 until the mean value of the overall valence of the vanadium ions in the electrolyte reservoirs of the battery returns to 3.5. By means of using a liquid reducing agent, feeding is simplified, and the reaction rate of the reducing agent with a positive electrolyte having a high content of pentavalent vanadium is fast. The extent of the valence-decreasing reaction of the reducing agent and the residual amount of the reducing agent are strictly monitored, so that the risk of the performance of a stack being affected due to the residue of the reducing agent is reduced.

FIG. 1

**Description**

RELATED APPLICATIONS

This application claims priority to Chinese Patent Application No. 202310659813.0, filed June 6, 2023, and titled METHOD FOR RECOVERING CAPACITY OF VANADIUM REDOX FLOW BATTERY, which is incorporated herein by reference in its entirety.

TECHNICAL FIELD

The present disclosure relates to electrochemical energy storage technology and, more particularly, to a method for recovering the battery capacity of a vanadium redox flow battery on the basis of chemical reduction.

BACKGROUND

Vanadium redox flow batteries are preliminarily commercially mature medium- to long-term energy storage technology, and belong to the category of electrochemical energy storage. Compared with other electrochemical energy storage technologies, vanadium redox flow batteries are characterized by being intrinsically safe, capable of deep charging and deep discharging, free from risks of fire and explosion, etc. The electrolytes account for the highest costs of a vanadium redox flow battery system. Although the initial cost of the electrolytes is greatly affected by the price of vanadium, existing electrolyte regeneration technologies ensure recycling of vanadium ions for a long period of time.

The active species in the electrolytes of the vanadium redox flow battery is vanadium ions, which are dissolved in an aqueous solution of sulfuric acid. Tetravalent vanadium (V(IV)) and pentavalent vanadium (V(V)) are present at the positive electrode of the vanadium redox flow battery, and divalent vanadium (V(II)) and trivalent vanadium (V(III)) are present at the negative electrode thereof. During the charging process, electrical energy is stored in the form of chemical energy in vanadium ions of different valences, and during the discharging process, the vanadium ions undergo their corresponding reversible electrochemical reactions and release the chemical energy again as electrical energy.

Typically, when the vanadium redox flow battery is not charged, the positive electrolyte comprises tetravalent vanadium (V(IV)) and the negative electrolyte comprises trivalent vanadium (V(III)). That is, the overall valence of the electrolytes as a whole is a mean value of 3.5. However, during long-term charging and discharging processes of the vanadium redox flow battery, the overall valence of the electrolytes tends to rise due to the influence of a small amount of hydrogen evolution reaction or a small amount of oxygen. When the overall valence of the vanadium battery is higher than 3.5, the discharge capacity of the vanadium battery is affected, and the utilization rate of the electrolytes is compromised. In terms of principle, this problem can be solved by correcting the valence of the electrolytes.

At present, methods for recovering battery capacity by reducing the valence of the electrolytes, which have been reported domestically and abroad, mainly include chemical methods and electrochemical methods. The above methods are all based on the mechanism of reduction, and existing chemical reduction schemes have one or more of the following drawbacks:

    1. The reducing agents selected comprise certain solid compounds, posing a challenge for the feeding requirements of the piping of the battery system.

    2. In the case that the reaction of the reducing agent takes place after discharging of the battery is completed, at which time the content of pentavalent vanadium (V(V)) in the positive electrolyte is low, the pentavalent vanadium acting as the main reactant of the reduction reaction may result in a long reduction time.

    3. In the case that the reaction of the reducing agent takes place during the charging and discharging reactions of the battery, the reducing agent may come into contact with the surface of the stack material of the vanadium battery, and the performance of the stack is at risk of being affected.

    4. The residual amount of the reducing agent after the reaction is completed is not monitored, and the performance of the stack is at risk of being affected.

SUMMARY

The present application provides a method for recovering the capacity of a vanadium redox flow battery by using a liquid reducing agent. By means of using the liquid reducing agent, feeding is simplified, and the reaction rate of the reducing agent with an electrolyte having a high content of pentavalent vanadium (V(V)) is fast. At the same time, the extent of the valence-decreasing reaction of the reducing agent and the residual amount of the reducing agent are strictly monitored, so that the risk of the performance of the stack being affected due to the residue of the reducing agent is reduced.

Compared with related prior art, the present application relates to a method for recovering the capacity of a vanadium redox flow battery, comprising the steps of:

S100: determining the overall valence of vanadium ions in electrolyte reservoirs of the battery after the discharge capacity of the battery attenuates, and charging the battery;

S200: adding a reducing agent to a positive electrolyte reservoir of the battery;

S300: allowing self-circulation in the positive electrolyte reservoir of the battery, so as to complete a chemical reduction reaction;

S400: determining the overall valence of the vanadium ions in the electrolyte reservoirs of the battery and determining the residue of the reducing agent; and/or

S500: replenishing the reducing agent in the positive electrolyte reservoir of the battery, and repeating steps S300 to S400 until the mean value of the overall valence of the vanadium ions in the electrolyte reservoirs of the battery returns to 3.5, and no residue of the reducing agent is present in an electrolyte.

In an exemplary embodiment, step S100 comprises:

S101: sampling the electrolyte in the positive electrolyte reservoir of the battery and an electrolyte in a negative electrolyte reservoir of the battery, respectively, and performing electrochemical titration analysis and cyclic voltammetric analysis to obtain the valence and concentration of the vanadium ions in the positive electrolyte and the valence and concentration of the vanadium ions in the negative electrolyte, wherein a platinum disc electrode or a glassy carbon electrode is used as a working electrode in the cyclic voltammetric analysis; and

S102, calculating, according to the determination results in step S101, the current overall valence A of the vanadium ions in the electrolyte reservoirs of the battery, the calculation formula being as follows:

$$A = \frac{a_p c_p V_p + a_n c_n V_n}{c_p V_p + c_n V_n}$$

,

where $a_p$ and $a_n$ represent the valence of the vanadium ions in the positive electrolyte and the valence of the vanadium ions in the negative electrolyte, respectively, $c_p$ and $c_n$ represent the concentration of the vanadium ions in the positive electrolyte and the concentration of the vanadium ions in the negative electrolyte, respectively, and $V_p$ and $V_n$ represent the volume of the positive electrolyte and the volume of the negative electrolyte, respectively.

In an exemplary embodiment, optionally, step S100 further comprises:
S103: charging the battery to an SOC of 50% to 70%, preferably 65%.
In an exemplary embodiment, step S200 comprises calculating the theoretical usage amount of the reducing agent according to the overall valence in step S 100 and a reaction equation of pentavalent vanadium ions (V(V)) with the reducing agent, wherein the reaction equation is as follows:

$$q V(V) + C_x H_y O_z \rightarrow q V(IV) + x CO_2 + z H_2 O$$

,

That is, in order to decrease the valence of 1 mol of the vanadium ions in the electrolyte by one, the theoretical usage amount of the reducing agent is **1/$q$** mol.
In an exemplary embodiment, in step S200, optionally, the reducing agent is added at 70% to 90% of the theoretical usage amount to the positive electrolyte reservoir of the battery.
In an exemplary embodiment, in step S200, optionally, the reducing agent is an organic reducing agent, preferably one or a plurality of pyridine, ascorbic acid, oxalic acid, formic acid, and ethylene glycol, and more preferably ethylene glycol.

In an exemplary embodiment, in step S300, optionally, the time of the self-circulation in the positive electrolyte reservoir of the battery is 2 to 24 hours, preferably 5 hours.

In an exemplary embodiment, step S400 comprises repeating steps S101 and S102 to determine the overall valence of the vanadium ions in the electrolyte reservoirs of the battery, and determining the residue of the reducing agent according to the cyclic voltammetric analysis, wherein a platinum disc electrode or a glassy carbon electrode is used as the working electrode in the electrochemical cyclic voltammetric analysis.

In an exemplary embodiment, step S500 comprises: replenishing, according to the determination results in step S400, the reducing agent in the positive electrolyte reservoir of the battery and repeating steps S300 to S400 multiple times, until the mean value of the overall valence of the vanadium ions in the electrolyte reservoirs of the battery returns to 3.5, and no significant residue of the reducing agent is present in the electrochemical cyclic voltammetric analysis.

In an exemplary embodiment, optionally, in step S500, the reducing agent is replenished at 5% of the theoretical usage amount each time, and the time of the self-circulation is 2 hours each time.

In an exemplary embodiment, the method further comprises completely discharging the vanadium redox flow battery after capacity recovery.

Compared with related prior art, the method described in the present application has the following advantageous benefits:

1. All chemical reagents used in the method of the present application are liquid chemical reagents, which have low requirements for the feeding design of the battery system and are easy to operate.

2. In the method of the present application, the reducing agent is added to the positive electrolyte which is at a certain state of charge and which comprises more pentavalent vanadium (V(V)). The reaction of the reducing agent with the pentavalent vanadium can be completed in a short time to decrease the valence, which reduces the time requirement for capacity recovery.

3. In the method of the present application, after the reducing agent is added, the reaction of the reducing agent with the electrolyte takes place only in the electrolyte, and the reducing agent will not come into contact with the electrode material and membrane material of the battery stack, thereby avoiding the risk of affecting the performances of the stack materials.

4. In the method of the present application, the amount of the reducing agent added is strictly controlled, and the residual amount of the reducing agent after the reaction is completed is promptly monitored by electrochemical cyclic voltammetric analysis, which can prevent an excess of the reducing agent from entering into the stack and affecting the performance of the stack.

Other features and advantages of the present application will be set forth in the following description, and in part will become apparent from the description, or may be understood by means of the implementation of the present application. Other advantages of the present application will be achieved and attained by means of the solutions described in the description and the accompanying drawings.

BRIEF DESCRIPTION OF THE DRAWINGS

The accompanying drawings are used to provide an understanding of the technical solutions of the present application and constitute a part of the specification, and together with the embodiments of the present application, are used to explain the technical solution of the present application and not to limit the technical solution of the present application.

FIG. 1 shows a graph of capacity attenuation of the vanadium redox flow battery after long-term operation in Example 1 of the present application, before the method of the present application was used;

FIG. 2 shows the electrochemical cyclic voltammetry curve in Example 1 of the present application, wherein curve 1 is the electrochemical cyclic voltammetry curve of electrolyte samples before ethylene glycol was added as a reducing agent, curve 2 is the electrochemical cyclic voltammetry curve of electrolyte samples fifteen minutes after ethylene glycol was added as the reducing agent, and curve 3 is the electrochemical cyclic voltammetry curve of electrolyte samples five hours after ethylene glycol was added as the reducing agent;

FIG. 3 illustrates the principle for determining the residual amount of the reducing agent by electrochemical cyclic voltammetric analysis in the present application;

FIG. 4 shows the charging and discharging capacities of the vanadium redox flow battery in Example 1 of the present application after capacity recovery;

FIG. 5 shows the battery efficiency of the vanadium redox flow battery in Example 1 of the present application after capacity recovery; and

FIG. 6 shows the effect of different reducing agents on the valence of the electrolyte in Experimental Example 1 of the present application.

DETAILED DESCRIPTION

The below examples herein are used for the understanding of the technical solution of the present invention, but the scope of protection of the present patent for invention is not limited by the examples. Non-inventive modifications and improvements can be made on the basis of the present invention, and such modifications and improvements all belong to the scope of protection of the present invention.

Example 1

Reducing agent: ethylene glycol (molar mass: 62 g/mol, density: 1.11 g/ml)

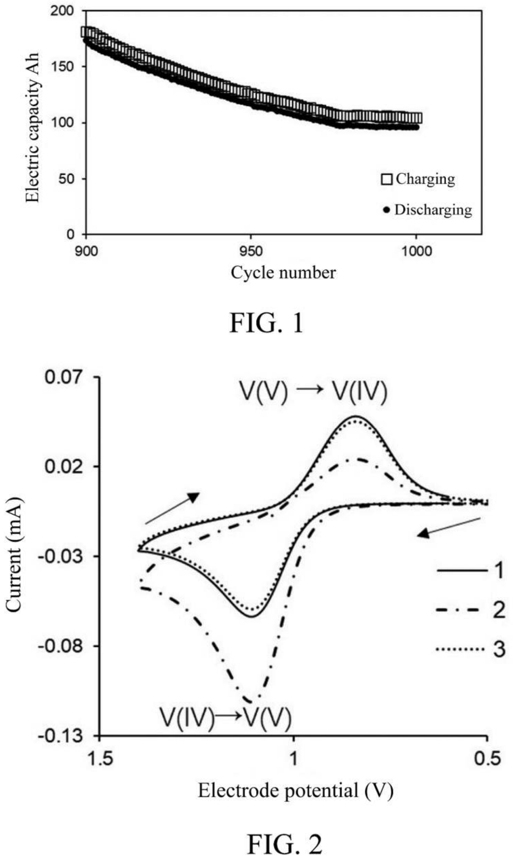

1) 1000 charge-discharge cycles were performed on an vanadium redox flow battery system having a discharge capacity of 1 kW/4 kWh (containing a total of 240 L of 1.7 M electrolytes having an initial valence of 3.51), and the discharge capacity significantly attenuated. The initial discharge capacity of the battery was about 310 Ah, and at a later stage, the capacity quickly attenuated. As shown in FIG. 1, the capacity attenuation exceeded 50 Ah during the 900th to 950th charge/discharge cycles.

2) The positive and negative electrolytes were respectively sampled, and electrochemical titration analysis and cyclic voltammetric analysis were performed to obtain the valence and concentration of vanadium ions in the positive and negative electrolytes, as shown in Table 1 below. The electrochemical titration analysis step was performed with reference to the 全 钒液流电池用电解液测试方法, unofficial translation (Test method for electrolytes for vanadium redox flow batteries) section of NB/T 42006-2013, and the cyclic voltammetric analysis step was performed with reference to Li L., Kim S., Wang W., et al., A stable vanadium redox-flow battery with high energy density for large-scale energy storage [J], Advanced Energy Materials, 2011, 1(3): 394-400.

Table 1

| Positive valence $a_p$ | Positive concentration $c_p$ | Positive volume $V_p$ | Negative valence $a_n$ | Negative concentration $c_n$ | Negative volume $V_n$ |
|---|---|---|---|---|---|
| 4.12 | 1.71 M | 124 L | 3.08 | 1.69 M | 116 L |

The current overall valence A of the vanadium ions in electrolyte reservoirs of the battery was calculated according to the determination results, and then the battery was charged to 55% SOC:

$$A = \frac{a_p c_p V_p + a_n c_n V_n}{c_p V_p + c_n V_n} = 3.62$$

3) The theoretical value of the reducing agent ethylene glycol required to be added was calculated according to the current overall valence A of the vanadium ions in the electrolyte reservoirs of the battery, and a reaction equation of pentavalent vanadium ions (V(V)) and the reducing agent:

$$10V(V) + C_2H_6O_2 \rightarrow 10V(IV) + 2CO_2 + 2H_2O$$

It can be seen from the determination results that theoretically, 4.9 mol of ethylene glycol, that is, 274 mL of ethylene glycol, is required to decrease the valence of 408 mol of the electrolytes by 0.12.

4) On this basis, 220 mL of ethylene glycol was initially added to a positive electrolyte reservoir of the battery, and self-circulation of the positive electrolyte reservoir was started. After 15 minutes of self-circulation, the positive electrolyte reservoir and a negative electrolyte reservoir of the battery were respectively sampled for 10 ml of the electrolytes to perform electrochemical cyclic voltammetric analysis. The results were compared with those of the electrolyte samples when determining the initial valence before adding ethylene glycol, as can be seen in FIG. 2.

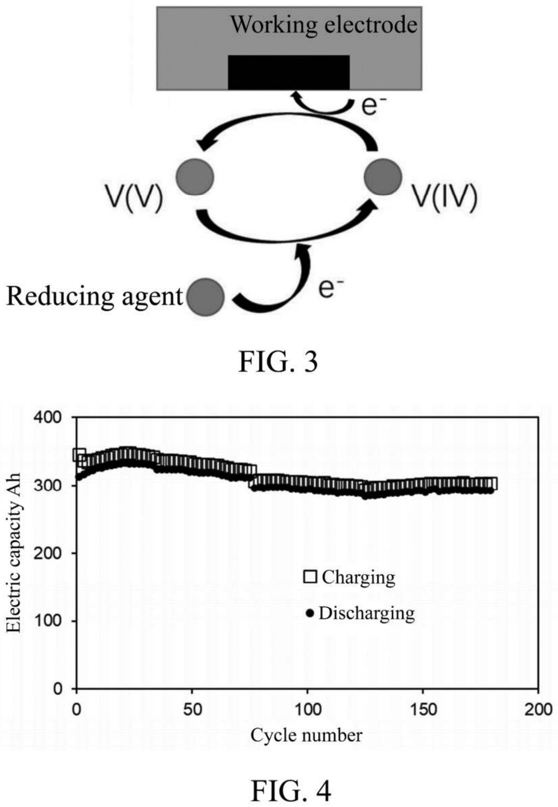

As shown in FIG. 2, volt-ampere curve 2 corresponded to the samples a short time after the reducing agent ethylene glycol was added. Compared with curve 1 before the reducing agent was added, curve 2 exhibited a large oxidation electric current (-0.11 mA), whereas the reduction electric current corresponding to curve 2 decreased. This phenomenon was dictated by the amount of electric current on the electrode from conversion of V(IV) to V(V), because: a short time after the reducing agent was added, the ethylene glycol in the electrolyte samples had not yet reacted completely, and when determining the oxidation electric current by cyclic voltammetry by using a glassy carbon disc electrode, the presence of the reducing agent ethylene glycol might convert V(V) to V(IV), and V(IV) could contribute an electric current again on the surface of the electrode. Therefore, an increase in the oxidation electric current occurred in curve 2 compared with curve 1 for which the reducing agent was not comprised (as shown in FIG. 3). After self-circulation of the positive electrolyte reservoir for five hours, step 2) was repeated. The volt-ampere curve obtained at this time (curve 3) substantially coincided with curve 1 before the addition of the reducing agent, indicating that the reducing agent ethylene glycol had reacted completely. However, since the overall valence had not yet dropped to 3.5, 14 mL of ethylene glycol was further added, and self-circulation in the electrolyte reservoir was performed for two hours.

5) After repeating step 2) three times, it was found that the overall valence of the electrolytes had dropped to 3.52, and the electrolyte had no residual ethylene glycol. At this time, the electrolytes were circulated to the inside of the stack to perform discharge once.

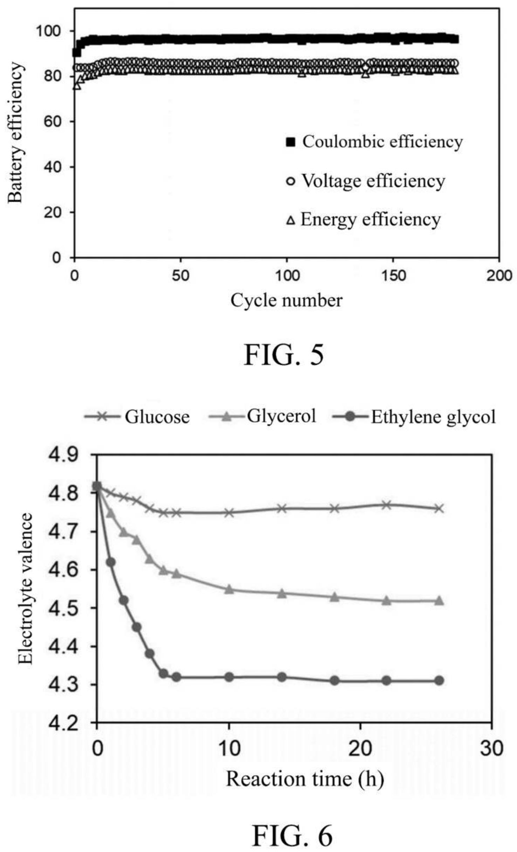

6) Finally, this 1 kW/4 kWh vanadium redox flow battery was again subjected to 180 charge-discharge cycles, the charge-discharge capacity of which is shown in FIG. 4. It can be seen that the capacity of the battery was significantly improved compared with the capacity before the addition of the reducing agent (FIG. 1), and was substantially recovered to the initial capacity of 310 Ah. The battery efficiency after capacity recovery also remained stable. As shown in FIG. 5, the coulombic efficiency was around 98%, and the energy efficiency was stable at around 83%.

Experimental Example 1. Comparison of the effects of different reducing agents

Different reducing agents were used to investigate 1.7 M vanadium electrolyte having an initial valence of around 4.8 with the aim of decreasing the valence of 500 ml of the electrolyte by 0.5. The specific steps were as follows:

The usage amounts of the different reducing agents were calculated on the basis of the redox reaction equation in the present application, and the respective reducing agents were added. Before and 1 h, 2 h, 3 h, 4 h, 5 h, 6 h, 10 h, 14 h, 18 h, 22 h, and 26 h after the addition of the respective reducing agents, 10 mL of the electrolyte was sampled, and the valence of the electrolyte was determined using the electrochemical titration method, and recorded.

Items to be investigated: (1) whether the reaction mechanism corresponded to the redox reaction equation in the present application; and (2) whether the reaction time met the requirement.

The changes in the valence of the electrolyte after the addition of different reducing agents were compared, as shown in FIG. 6.

Conclusion: when ethylene glycol in Example 1 of the present invention was used as the reducing agent, after the theoretically calculated amount was added to the electrolyte, the valence of the electrolytes could decrease to the expected value (4.8 to 4.3), and the reaction time was relatively short (around 5 h), which could achieve the technical effect of the present application. When another reducing agent such as glucose was used, despite the reducing properties of glucose itself, the reaction was weak due to reasons such as the high activation energy required for the reaction, and the valence could barely be decreased. When a further reducing agent such as glycerol was used, the results of valence monitoring revealed that the reaction rate of the glycerol with the vanadium ions was slow, and the valence could not be decreased to the expected value even at the end of the reaction. It is presumed that the reaction mechanism of glycerol with vanadium ions might be complicated, the reaction ratio was difficult to determine, and other side reaction products could be easily generated.

The examples of the present application are illustrative rather than limiting, and it will be apparent to those of ordinary skill in the art that more examples and implementations are possible within the scope encompassed by the examples described in the present application.

**Claims**

1. A method for recovering the battery capacity of a vanadium redox flow battery, **characterized by** comprising the following steps:

   S100: determining the overall valence of vanadium ions in electrolyte reservoirs of the battery after the discharge capacity of the battery attenuates, and charging the battery;
   S200: adding a reducing agent to a positive electrolyte reservoir of the battery;
   S300: allowing self-circulation in the positive electrolyte reservoir of the battery, so as to complete a chemical reduction reaction;
   S400: determining the overall valence of the vanadium ions in the electrolyte reservoirs of the battery again, and determining the residue of the reducing agent; and/or
   S500: replenishing the reducing agent in the positive electrolyte reservoir of the battery, and repeating steps S300 to S400 until the mean value of the overall valence of the vanadium ions in the electrolyte reservoirs of the battery returns to 3.5, and no residue of the reducing agent is present in an electrolyte.

2. The method according to claim 1, wherein step S100 comprises:

   S101: sampling the positive electrolyte and a negative electrolyte in the reservoirs of the battery, respectively, and performing electrochemical titration analysis and cyclic voltammetric analysis to obtain the valence and concentration of the vanadium ions in the positive electrolyte and the valence and concentration of the vanadium ions in the negative electrolyte; and
   S102, calculating, according to the determination results in step S101, the current overall valence A of the vanadium ions in the electrolyte reservoirs of the battery, the calculation formula being as follows:

   $$A = \frac{a_p c_p V_p + a_n c_n V_n}{c_p V_p + c_n V_n},$$

   where $a_p$ and $a_n$ represent the valence of the vanadium ions in the positive electrolyte and the valence of the vanadium ions in the negative electrolyte, respectively, $c_p$ and $c_n$ represent the concentration of the vanadium ions in the positive electrolyte and the concentration of the vanadium ions in the negative electrolyte, respectively, and $V_p$ and $V_n$ represent the volume of the positive electrolyte and the volume of the negative electrolyte, respectively.

3. The method according to claim 2, wherein step S100 further comprises:
   S103: charging the battery to an SOC of 50% to 70%.

4. The method according to claim 3, wherein step S100 further comprises:
   S103: charging the battery to an SOC of 65%.

5. The method according to claim 1, wherein step S200 comprises: calculating the theoretical usage amount of the reducing agent according to the overall valence in step S 100 and a reaction equation of pentavalent vanadium ions (V(V)) with the reducing agent, wherein the reaction equation is as follows:

   $$q\mathrm{V(V)} + \mathrm{C}_x\mathrm{H}_y\mathrm{O}_z \rightarrow q\mathrm{V(IV)} + x\mathrm{CO}_2 + z\mathrm{H}_2\mathrm{O},$$

   which shows that in order to decrease the valence of 1 mol of the vanadium ions in the electrolyte by one, the theoretical usage amount of the reducing agent is **1/q** mol; and
   adding the reducing agent at 70% to 90% of the theoretical usage amount to the positive electrolyte reservoir of the battery.

6. The method according to claim 5, wherein the reducing agent is selected from one or a plurality of pyridine, ascorbic acid, oxalic acid, formic acid, and ethylene glycol.

7. The method according to 6, wherein the reducing agent is ethylene glycol.

8. The method according to claim 1, wherein in step S300, the time of the self-circulation in the positive electrolyte reservoir of the battery is 2 to 24 hours.

9. The method according to claim 8, wherein in step S300, the time of the self-circulation of the positive electrolyte reservoir of the battery is 5 hours.

10. The method according to claim 2, wherein step S400 comprises: repeating steps S101 and S102 to determine the overall valence of the vanadium ions in the electrolyte reservoirs of the battery, and determining the residue of the reducing agent according to the cyclic voltammetric analysis.

11. The method according to claim 1, wherein step S500 comprises: replenishing, according to the determination results in step S400, the reducing agent in the positive electrolyte reservoir of the battery and repeating steps S300 to S400 multiple times, until the mean value of the overall valence of the vanadium ions in the electrolyte reservoirs of the battery returns to 3.5, and no significant residue of the reducing agent is present in electrochemical cyclic voltammetric analysis.

FIG. 1

FIG. 2

FIG. 3

FIG. 4

FIG. 5

FIG. 6

## INTERNATIONAL SEARCH REPORT

International application No.

**PCT/CN2024/096212**

### A. CLASSIFICATION OF SUBJECT MATTER

H01M8/18(2006.01)i; H01M8/008(2016.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; ENTXT; ENTXTC; CNKI: 钒, 液流电池, 恢复, 修复, 价态, 正极, 储液罐, 还原剂, 残留, vanadium, flow, battery, recovery, repair, valence, positive, reservoir, reductant, residual

### C. DOCUMENTS CONSIDERED TO BE RELEVANT

| Category* | Citation of document, with indication, where appropriate, of the relevant passages | Relevant to claim No. |
|---|---|---|
| PX | CN 116387583 A (BEIJING PRUDENT ENERGY TECHNOLOGY CO., LTD.) 04 July 2023 (2023-07-04) claims 1-11 | 1-11 |
| Y | CN 103035963 A (INSTITUTE OF METAL RESEARCH, CHINESE ACADEMY OF SCIENCES) 10 April 2013 (2013-04-10) description, paragraphs 3-19 | 1, 8-9, 11 |
| Y | CN 109841875 A (ZHANGJIAKOU WIND AND SOLAR POWER ENERGY DEMONSTRATION STATION CO., LTD., STATE GRID XINYUAN COMPANY et al.) 04 June 2019 (2019-06-04) description, paragraphs 2-3 and 15-30, and figures 1-2 | 1, 8-9, 11 |
| Y | CN 116014160 A (SOUTH UNIVERSITY OF SCIENCE AND TECHNOLOGY et al.) 25 April 2023 (2023-04-25) description, paragraphs 26-62, and figures 1-8 | 1, 8-9, 11 |
| Y | CN 115882021 A (SHENYANG HENGJIU ANTAI ENVIRONMENTAL PROTECTION AND ENERGY SAVING TECHNOLOGY CO., LTD.) 31 March 2023 (2023-03-31) description, paragraphs 8-18, and figure 1 | 1, 8-9, 11 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 August 2024** | **21 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 726 818 A1**

**INTERNATIONAL SEARCH REPORT**

**C.    DOCUMENTS CONSIDERED TO BE RELEVANT**

| Category* | Citation of document, with indication, where appropriate, of the relevant passages | Relevant to claim No. |
|---|---|---|
| A | CN 102468499 A (ENN SCIENCE AND TECHNOLOGY DEVELOPMENT CO., LTD.) 23 May 2012 (2012-05-23)<br>entire document | 1-11 |
| A | CN 114094148 A (HANGZHOU DREIECK ENERGY TECHNOLOGY CO., LTD.) 25 February 2022 (2022-02-25)<br>entire document | 1-11 |

Form PCT/ISA/210 (second sheet) (July 2022)

**INTERNATIONAL SEARCH REPORT**
Information on patent family members

International application No.

**PCT/CN2024/096212**

| Patent document cited in search report | | | Publication date (day/month/year) | Patent family member(s) | Publication date (day/month/year) |
|---|---|---|---|---|---|
| CN | 116387583 | A | 04 July 2023 | None | |
| CN | 103035963 | A | 10 April 2013 | None | |
| CN | 109841875 | A | 04 June 2019 | None | |
| CN | 116014160 | A | 25 April 2023 | None | |
| CN | 115882021 | A | 31 March 2023 | None | |
| CN | 102468499 | A | 23 May 2012 | None | |
| CN | 114094148 | A | 25 February 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310659813

**Non-patent literature cited in the description**

- **LI L** ; **KIM S.** ; **WANG W. et al.** A stable vanadium redox-flow battery with high energy density for large-scale energy storage [J. *Advanced Energy Materials*, 2011, vol. 1 (3), 394-400